# EUROPEAN PATENT SPECIFICATION

(11) **EP 3 608 214 B1**
(45) Date of publication and mention of the grant of the patent: **28.04.2021**
(21) Application number: 19187547.5
(22) Date of filing: 22.07.2019
(51) Int. Cl.: B62D 65/02, B62D 65/06

(54) **SUPPORT FOR MOTOR-VEHICLE DOORS, IN PARTICULAR DESIGNED FOR INSTALLATION ON A MOBILE ASSEMBLY STATION FOR MOTOR VEHICLES**
TRÄGER FÜR KRAFTFAHRZEUGTÜREN, INSBESONDERE FÜR DIE INSTALLATION AUF EINER MOBILEN MONTAGESTATION FÜR KRAFTFAHRZEUGE
SUPPORT POUR PORTIÈRES DE VÉHICULE À MOTEUR, EN PARTICULIER CONÇU POUR ÊTRE INSTALLÉ SUR UNE STATION D'ASSEMBLAGE MOBILE POUR VÉHICULES À MOTEUR

(30) Priority: 26.07.2018 IT 201800007537
(43) Date of publication of application: 12.02.2020
(73) Proprietor: FCA Italy S.p.A., 10135 Torino (IT)
(72) Inventor: PADULA, Giovanni, I-10135 Torino (IT); BORGARELLO, Silvio, I-10135 Torino (IT); CIMMINO, Giuseppe, I-10135 Torino (IT); SANVIDO, Dino, I-10121 Torino (IT)
(74) Representative: De Bonis, Paolo

(56) References cited:
- FR-A1- 2 756 549
- FR-A1- 2 906 797
- FR-A1- 3 024 865
- GB-A- 2 238 761
- JP-A- S56 103 668

## Description

### Field of the invention

The present invention relates to equipment for motor-vehicle assembly lines. The invention regards a support for motor-vehicle doors, in particular semifinished doors, which require finishing and subsequent installation on the motor vehicle being assembled. Prior art supports of this type are known, e.g., from FR 3 024 865 A1, JP S56 103668 A, and FR 2 756 549 A1 FR3024865A1 shows the preamble of independent claim

### Prior art

On a motor-vehicle assembly line, in the area of transition between the area for sheet-metal work/painting and the area for equipping and fitting out the motor-vehicle bodyshells there frequently arises the problem of supply of bodywork components (side doors and hatchback doors) with which the bodyshell is to be equipped. The accessories undergo trimming according to how the motor vehicle is to be fitted out and are then installed on the bodyshell, which has already undergone sheet-metal work/painting. The motor-vehicle doors are typically supplied by means of overhead lines that converge towards the flow of the assembly line, moving along which is a plurality of stations for assembly of motor vehicles coming from the sheet-metal work/painting area. The doors have been separated from the bodyshells after exit from the painting area, and need to be joined again to the corresponding bodyshells, an operation that is typically carried out at the moment of body trimming.

This imposes the need for numerous additional line structures, in addition to the problem that, since these lines are overhead lines, the structure of the industrial building that houses the assembly line will be burdened by the static load due to the weight itself of the overhead line, as well as by possible dynamic loads deriving therefrom. Current solutions are consequently far from optimal, above all in view of the maintenance operations to be carried out on the buildings that house the assembly lines and of the very poor flexibility offered in the case of need for reconfiguration of the line. Notwithstanding this, for small-scale productions - for example, for vehicles in limited series and/or vehicles that are located in particular market segments - the impact that known solutions for supporting motor-vehicle doors present in terms of running costs and likely future costs renders recourse thereto far from practicable.

### Object of the invention

The object of the present invention is to solve the technical problems mentioned previously. In particular, the object of the present invention is to provide a support for motor-vehicle doors that can be installed on the line without any need for overhead structures and dedicated systems and that can be adapted to any scale of production and any motor-vehicle segment.

### Summary of the invention

The object of the present invention is achieved by a support for motor-vehicle doors having the features forming the subject of one or more of the annexed claims, which form an integral part of the technical disclosure provided herein in relation to the invention.

### Brief description of the drawings

The invention will now be described with reference to the annexed drawings, which are provided merely by way of non-limiting example and in which:
- Figure 1 is a perspective view of a support according to the invention in an unloaded condition and in a first operating position;
- Figure 2 is a perspective view corresponding to that of Figure 1, but illustrating the support in a loaded condition, with two motor-vehicle doors on board;
- Figure 3 is a top plan view according to the arrow III of Figure 2;
- Figure 4 is a perspective view of the support according to the invention in a loaded condition and in a second operating position;
- Figure 5 is a top plan view according to the arrow V of Figure 4;
- Figure 6 is a longitudinal sectional view of the support according to the invention;
- Figure 7 is a cross-sectional view of the support according to the invention according to the trace VII-VII of Figure 1; and
- Figure 8 is a schematic to plan view of a mobile assembly station for motor vehicles installed on which is a pair of supports according to the invention.

### Detailed description

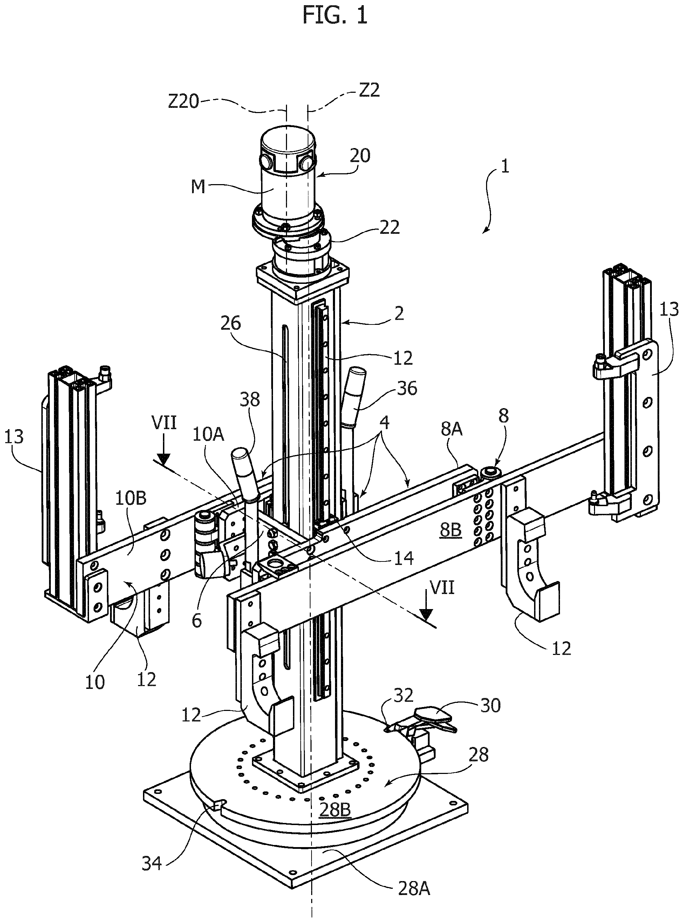

The reference number 1 in Figure 1 (and in the ensuing figures) designates as a whole a support for motor-vehicle doors, according to the invention, in particular designed for installation on a mobile assembly station, or skillet, for motor vehicles.

The support 1 comprises a column member 2 having a longitudinal axis Z2, and a supporting unit 4 configured for receiving at least one motor-vehicle door D. According to the development and to the modalities of operation of the support 1 illustrated in the figures, the axis Z2 has a vertical orientation.

The unit 4 includes a slider 6 coupled to the column member 2 and axially mobile along the longitudinal axis Z2.

The supporting unit 4 comprises a first articulated member 8 and a second articulated member 10, both connected to the slider 6 and each configured for receiving a motor-vehicle door D.

In general, in some embodiments, it is in any case possible to envisage only the first articulated member 8 so as to provide a support 1 configured for receiving only one door D instead of two.

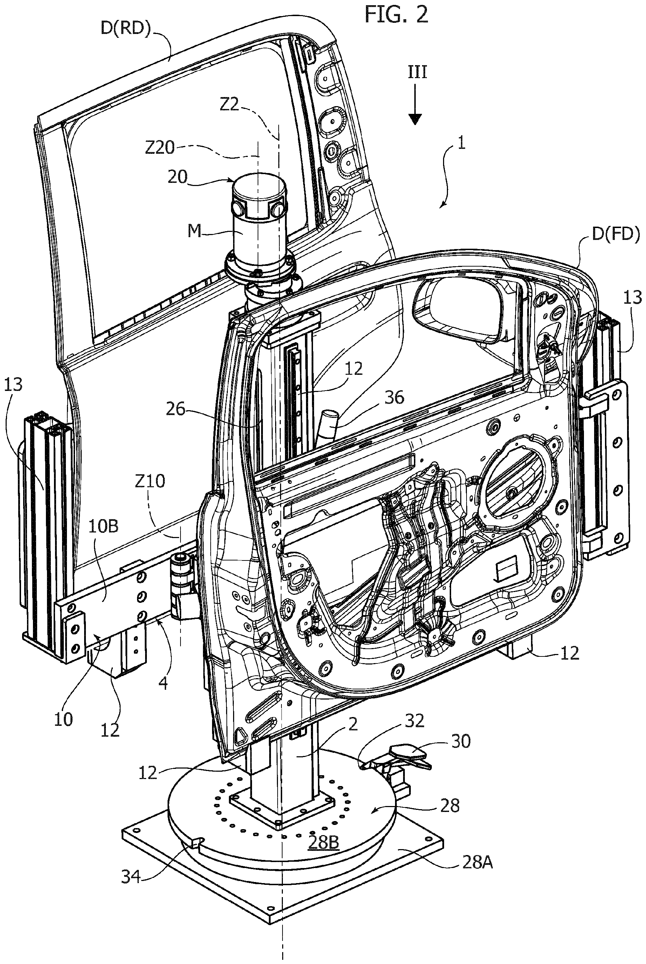

The articulated members 8, 10 each comprise a respective first portion 8A, 10A, fixed to the slider 6, and a respective second portion 8B, 10B connected in an articulated way to the corresponding first portion 8A, 10A and carrying at least one receiving element 12 for a motor-vehicle door D. Preferentially, each receiving element 12 is provided as a C-shaped bracket configured for exerting an action of vertical support in regard to the door D and for offering a horizontal contrast surface, preventing the door D from coming into contact with the portions 8B, 10B, thus ruining the metal sheet. Figure 2 illustrates in this regard a condition in which a pair of doors D are received on corresponding pairs of receiving elements 12, two in number for each portion 8B, 10B. Included in the number of possible receiving elements is moreover a lateral containment element 13 set at one end of the portion 8B, 10B (one element for each portion), which limits movement of the door D when it is on board the unit 4.

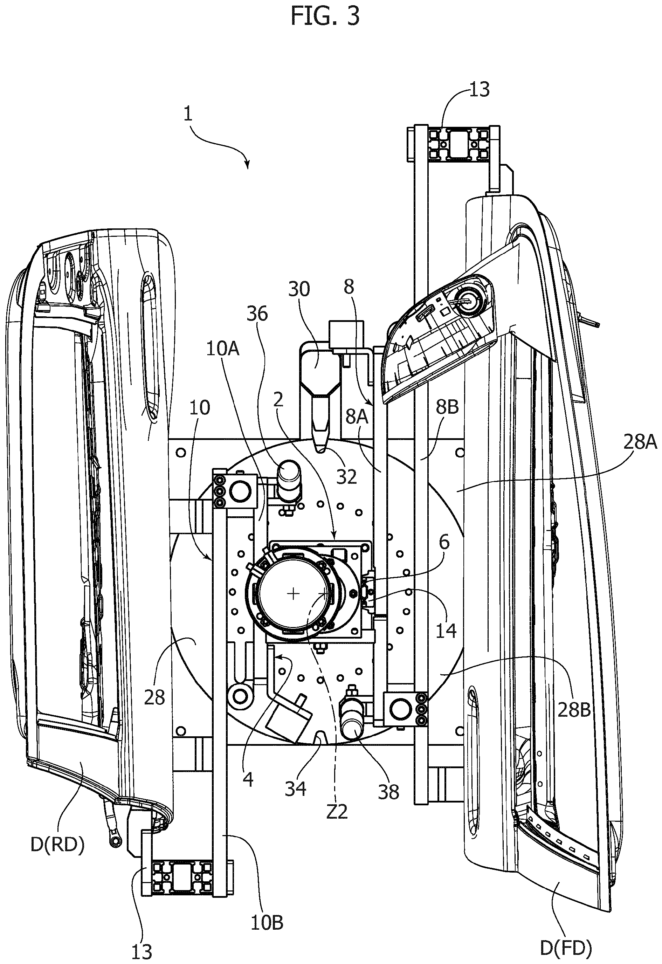

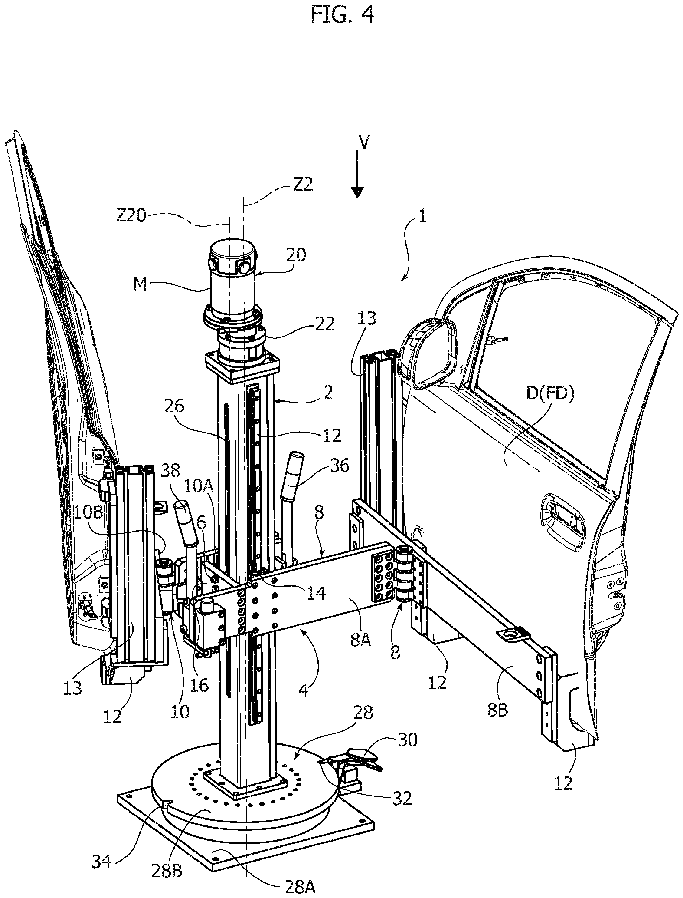

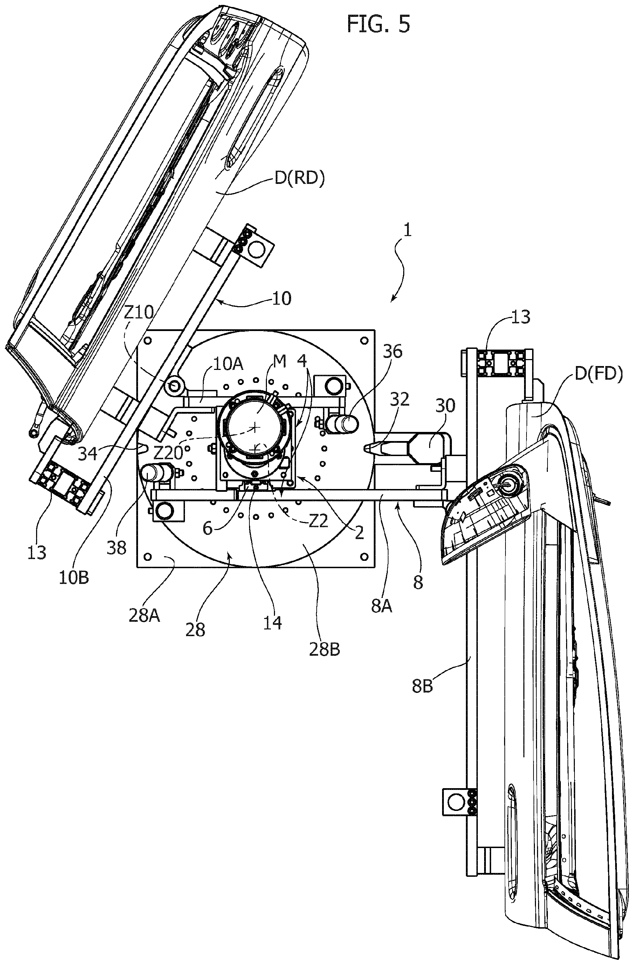

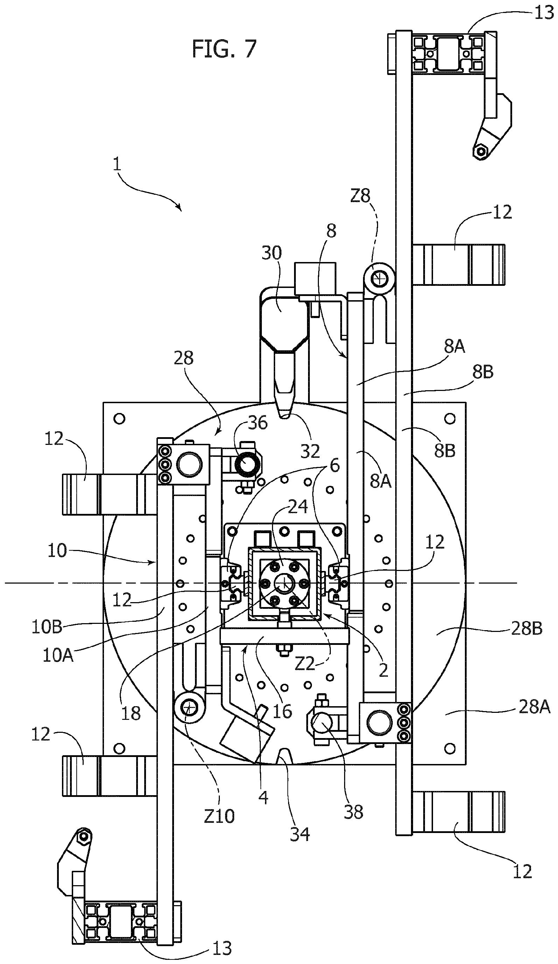

The second portions 8B, 10B of each articulated member 8, 10 are movable with respect to the corresponding first portion 8A, 10A between a collapsed position, which may be seen in Figures 1, 2, 3, 7, and 8, and a deployed position, which may be seen in Figures 4, 5, and 6, wherein in the deployed position a distance between the second portion 8B, 10B and the first portion 8A, 10A is greater than the distance corresponding angular distance in the collapsed position.

According to the invention each second portion 8B, 10B is pivotally connected to the first portion 8A, 10A about a respective axis Z8, Z10 parallel to the longitudinal axis Z2, providing in effect a hinge, of which the first portion 8A, 10A and the second portion 8B, 10B constitute a first hinge member and a second hinge member. As a result, in the deployed position of the articulated members 8, 10, the angular distance between the second portion 8B, 10B and the first portion 8A, 10A is greater than the angular distance between the same portions in the collapsed position. In general, in this embodiment, the second portion 8B, 10B describes, with respect to the first portion 8A, 10A, an angular displacement substantially equal to 90° between the collapsed position and the deployed position. Moreover, since preferentially all the portions 8A, 8B and 10A, 10B are provided as flat metal bars, it is very easy to provide bushings for assembly of a hinge. However, as may be noted, in various embodiments - like the one illustrated in the figures - the axis Z8, Z10 is not positioned at one end of the portion 8B, 10B, but is set in a position comprised between the two opposite ends, typically in a position comprised between one half and two thirds of the length thereof, where the reference position is measured starting from the end opposite to the one where the lateral containment element 13 is located.

The slider 6 - and the whole supporting unit 4 therewith - is mobile along a longitudinal guide 12 provided on the column member 2. Preferably, the guide 12 is a double guide provided by two guide profiles arranged on opposite sides of the column member 2, which for this purpose is obtained as a tubular element with quadrangular cross section.

In the preferred embodiment illustrated herein, the slider 6 is provided by the articulated members 8, 10 themselves, and in particular the first portions 8A, 10A carry a respective runner 14 that engages a corresponding profile of the double guide 12, whilst a transverse plate 16 fixed to both of the portions 8A, 10A engages a driving member 18 housed in the column member 2.

In the preferred embodiment illustrated herein, the driving member 18 is a screw, rotatable about the axis Z2, which is supported at opposite ends of the column member 2 and can be driven in rotation by means of a motor unit 20 installed on the column member 2, in particular in a top position. Preferably, the motor unit 20 comprises an electric motor M with axis of rotation Z20 parallel to the axis Z2 and is coupled to a speed reducer 22 with just one speed ratio having its input shaft connected to the motor M sharing the axis Z20, and its output shaft connected to the screw 18 coaxially to the axis Z2.

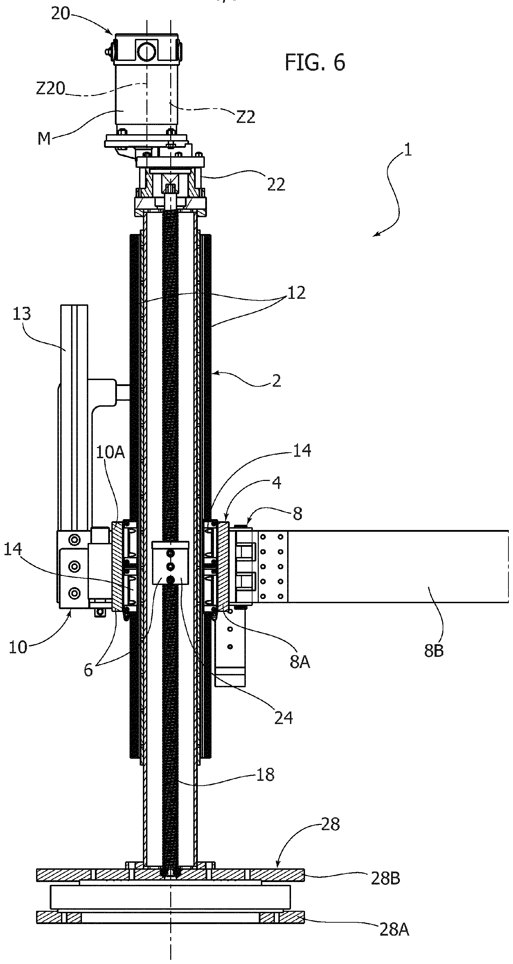

With reference to Figure 6, a nut 24 engages the screw 18 and is fixed to the slider 6 via connection to the transverse plate 16. The nut 24 is fixed to a supporting member orthogonal to the transverse plate 16, which penetrates into the wall of the column 2 comprised between the sides on which the profiles of the guide 12 are fixed through a longitudinal slit 26.

According to an advantageous aspect of the invention, the column member 2 (and the supporting unit 4 therewith) is rotatable about the longitudinal axis Z2. For this purpose, the column member 2 is mounted on a turntable base 28 rotatable about the axis Z2. In a way per se known, the turntable base 28 comprises a first component 28A fixed to the floor and a second component 28B that is rotatable with respect to the fixed component, with the column member 2 mounted on the rotatable component 28B.

The turntable base 28 includes a pedal control member 30 that can be driven by the operator and is configured for locking the turntable base 28 in two angular positions diametrally opposite to one another so as to render alternatively accessible one or the other door D on board the supporting unit 4 for the operator who is in a position corresponding to the pedal member 30. In this regard, the turntable base 28 can be equipped with a pair of angular-position references 32, 34 provided, for example, as radial notches on the periphery of the rotatable portion of the turntable base 28 where the pedal 30 comes to engage when it is not operated by the operator. In the case where two articulated members 8, 10 are provided, this facilitates locking of the support 1 in optimal positions for the operator to be able to reach the door D, given that the two articulated members 8, 10 are also in opposite positions.

To facilitate the operator in the manoeuvre of rotation of the support 1 about the axis Z2, there may conveniently be provided a grip for each articulated member 8, 10. Here, in particular, a solution is illustrated wherein a first grip 36 is fixed to the articulated member 10, in particular to the portion 10A, whilst a second grip 38 is fixed to the articulated member 8, in particular to the portion 8A.

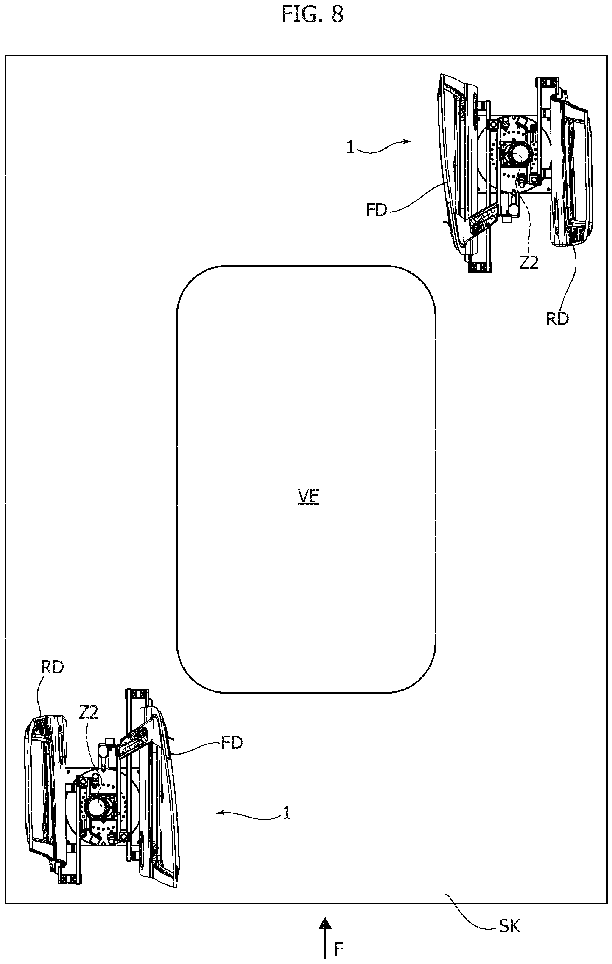

With reference to Figure 8, the reference SK designates as a whole a mobile assembly station (the so-called "skillet"), installed on which, here for example at opposite corners of the station, are two supports 1 provided with two articulated members 8, 10 so as to cover the four doors of the motor vehicle with just two supports 1 (each support 1 can carry, as in the example illustrated, a front door FD and a rear door RD). For three-door vehicles, it may be possible to equip the station SK with two supports 1 having a supporting unit with single articulated member (one door per support), or else with just one support 1 having two articulated members so as to carry both doors on board.

A motor vehicle VE is represented schematically inside the station SK, and the reference F denotes the advancement direction of the station SK along the line. The supports 1 at rest are kept with the articulated members 8, 10 in the collapsed position to minimise the overall dimensions. The supports 1 are positioned in such a way that, in the collapsed position, the doors D are positioned substantially parallel to the advancement direction F.

In use, i.e., at the moment of installation of the doors D on the motor vehicle, the operator, by driving the motor M, can adjust the height of the point where the doors D are picked up. The motor M drives the screw 18 in rotation, causing axial translation of the nut 24 and of the entire supporting unit 4 connected thereto. Once the height is fixed, the line operator can carry out trimming of the doors D on the support 1 and move them into a position closer to the motor vehicle. This is possible simply by bringing the second portion 8B or 10B into the deployed position, which can thus become a final position for enabling picking-up of the door D when the trimming operations are completed. Once the door D has been picked up from the support 1 and installed on the motor vehicle VE, the operator can release the turntable base 28 by operating the pedal control 30 and turn the support through 180° to work on the door D on the opposite side of the supporting unit 4, repeating the operations of trimming, picking-up, and installation on board the motor vehicle.

It will consequently be appreciated how the support 1 does not require any work of civil engineering to be able to operate jointly with the assembly line, thus simplifying enormously management of the line and opening up to the possibility of installation on lines for manufacture of small volumes of motor vehicles and/or lines for manufacture of large volumes of motor vehicles, but ones provided in buildings with lower structural requisites owing to the absence of overhead structures.

Thanks to the fact that the articulated members of the supporting unit 4 are movable between the collapsed position and the deployed position, it is possible to minimise the overall dimensions on board the mobile station SK, keeping the articulated members in the collapsed positionand using the deployed position only when it is actually necessary for the operations of trimming and installation to be carried out.

Of course, the details of construction and the embodiments may vary widely with respect to what has been described and illustrated herein, without thereby departing from the scope of the present invention, as defined by the annexed claims.

## Claims

1. A support (1) for motor-vehicle doors (D), in particular adapted for installation on a mobile assembly station (SK) for motor vehicles, comprising:
- a column member (2) having a longitudinal axis (Z2); and
- a support unit (4) configured for receiving at least one motor-vehicle door (D) and including a slider (6) coupled to said column member (2) and axially movable along said longitudinal axis (Z2),
said support unit (4) comprising at least one first articulated member (8, 10) connected to said slider (6), wherein a first portion (8A, 10A) of said articulated member (8, 10) is fixed to the slider (6) and a second portion (8B, 10B) of said articulated member (8, 10) is pivotally connected to said first portion (8A, 10A) and carries at least one receiving element (12) for a motor-vehicle door (D), and
wherein the second portion (8B, 10B) of each articulated member (8, 10) is movable with respect to the first portion (8A, 10A) between a collapsed position and a deployed position, where in the deployed position a distance between the second portion (8B, 10B) and the first portion (8A, 10A) is greater than the distance between the second portion (8B, 10B) and the first portion (8A, 10A) in the collapsed position,
the support (1) being **characterized in that** it further includes a second articulated member (10) connected to said slider (6), said second articulated member (10) including a respective first portion (10A) fixed to the slider (6) and a respective second portion (10B) pivotally connected to said first portion (10A) and carrying at least one receiving element (12) for a motor-vehicle door (D), wherein the second portion (10B) of said second articulated member (10) is movable with respect to the first portion (10A) between a collapsed position and a deployed position, wherein in the deployed position a distance between the second portion (10B) and the first portion (10A) is greater than the distance between the second portion (10B) and the first portion (10A) in the collapsed position.

2. The support (1) according to Claim 1, wherein the second portion (8B, 10B) is pivotally connected to the first portion (8A, 10A) about an axis (Z8, Z10) parallel to said longitudinal axis (Z2), wherein in the deployed position the angular distance between the second portion (8B, 10B) and the first portion (8A, 10A) is greater than the angular distance between the second portion (8B, 10B) and the first portion (8A, 10A) in the collapsed position.

3. The support (1) according to Claim 1, wherein said column member (2) is rotatable (28) about said longitudinal axis (Z2).

4. The support (1) according to Claim 1, wherein said slider (6) is movable along a longitudinal guide (12) provided on said column member (2), preferably a double guide, and engages a driving member (18) housed in said column member (2).

5. The support (1) according to Claim 4, wherein said driving member (18) is a screw rotatable about said longitudinal axis (Z2) and operable in rotation by means of a motor unit (20) installed on said column member (2), preferably on top thereof, said slider (6) including a nut (24) that engages said screw (18).

6. The support (1) according to Claim 2, wherein the second portion (8B, 10B) is configured for covering an angular range of 90° between said collapsed position and said deployed position.

7. The support (1) according to Claim 3, wherein said column member (2) includes a turntable base (28), said turntable base (28) including a pedal control member (30) configured for locking said turntable base (28) in diametrally opposite positions.

8. The support (1) according to Claim 1, wherein the second portion (8B, 10B) carries at least two receiving members (12) for a motor-vehicle door (D).

9. The support (1) according to Claim 5, wherein said screw (18) is rotatably supported at opposite ends of said column member (2).

## Patentansprüche

1. Träger (1) für Kraftfahrzeugtüren (D), insbesondere eingerichtet zur Installation an einer mobilen Montagestation (SK) für Kraftfahrzeuge, umfassend:
ein Säulenelement (2) mit einer Längsachse (Z2); und
eine Trage-Einheit (4), die zum Aufnehmen wenigstens einer Kraftfahrzeugtür (D) ausgeführt ist und einen Läufer (6) aufweist, der mit dem Säulenelement (2) gekoppelt ist und axial entlang der Längsachse (Z2) bewegt werden kann,
die Trage-Einheit (4) wenigstens ein erstes Gelenkelement (8, 10) umfasst, das mit dem Läufer (6) verbunden ist, wobei ein erster Abschnitt (8A, 10A) des Gelenkelementes (8, 10) an dem Läufer (6) befestigt ist und ein zweiter Abschnitt (8B, 10B) des Gelenkelementes (8, 10) schwenkbar mit dem ersten Abschnitt (8A, 10A) verbunden ist und wenigstens ein Aufnahmeelement (12) für eine Kraftfahrzeugtür (D) trägt, und
wobei der zweite Abschnitt (8B, 10B) jedes Gelenkelementes (8, 10) in Bezug auf den ersten Abschnitt (8A, 10A) zwischen einer eingeklappten Position und einer ausgeklappten Position bewegt werden kann, wobei in der ausgeklappten Position ein Abstand zwischen dem zweiten Abschnitt (8B, 10B) und dem ersten Abschnitt (8A, 10A) größer ist als der Abstand zwischen dem zweiten Abschnitt (8B, 10B) und dem ersten Abschnitt (8A, 10A) in der eingeklappten Position,
der Träger (1) **dadurch gekennzeichnet ist, dass** er des Weiteren ein zweites Gelenkelement (10) umfasst, das mit dem Läufer (6) verbunden ist, wobei das zweite Gelenkelement (10) einen jeweiligen ersten Abschnitt (10A), der an dem Läufer (6) befestigt ist, und einen jeweiligen zweiten Abschnitt (10B) enthält, der schwenkbar mit dem ersten Abschnitt (10A) verbunden ist und wenigstens ein Aufnahmeelement (12) für eine Kraftfahrzeugtür (D) trägt,
wobei der zweite Abschnitt (10B) des zweiten Gelenkelementes (10) in Bezug auf den ersten Abschnitt (10A) zwischen einer eingeklappten Position und einer ausgeklappten Position bewegt werden kann, wobei in der ausgeklappten Position ein Abstand zwischen dem zweiten Abschnitt (10B) und dem ersten Abschnitt (10A) größer ist als der Abstand zwischen dem zweiten Abschnitt (10B) und dem ersten Abschnitt (10A) in der eingeklappten Position.

2. Träger (1) nach Anspruch 1, wobei der zweite Abschnitt (8B, 10B) mit dem ersten Abschnitt (8A, 10A) um eine Achse (Z8, Z10) parallel zu der Längsachse (Z2) schwenkbar verbunden ist, in der ausgeklappten Position der Winkelabstand zwischen dem zweiten Abschnitt (8B, 10B) und dem ersten Abschnitt (8A, 10A) größer ist als der Winkelabstand zwischen dem zweiten Abschnitt (8B, 10B) und dem ersten Abschnitt (8A, 10A) in der eingeklappten Position.

3. Träger (1) nach Anspruch 1, wobei das Säulenelement (2) um die Längsachse (Z2) herum gedreht werden kann.

4. Träger (1) nach Anspruch 1, wobei der Läufer (6) entlang einer an dem Säulenelement (2) vorhandenen Längs-Führung (12), vorzugsweise einer Doppel-Führung, bewegt werden kann und mit einem Antriebselement (18) in Eingriff kommt, das in dem Säulenelement (2) aufgenommen ist.

5. Träger (1) nach Anspruch 4, wobei das Antriebselement (18) eine um die Längsachse (Z2) herum drehbare Gewindespindel ist, die mittels einer an dem Säulenelement (2), vorzugsweise an dessen Oberseite, installierten Motor-Einheit (20) in Drehung versetzt werden kann, und der Läufer (6) eine Mutter (24) einschließt, die mit der Gewindespindel (18) in Eingriff ist.

6. Träger (1) nach Anspruch 2, wobei der zweite Abschnitt (8B, 10B) so ausgeführt ist, dass er einen Winkelbereich von 90° zwischen der eingeklappten Position und der ausgeklappten Position abdeckt.

7. Träger (1) nach Anspruch 3, wobei das Säulenelement (2) eine Drehtisch-Basis (28) einschließt und die Drehtisch-Basis (28) ein Pedal-Steuerungselement (30) enthält, das zum Arretieren der Drehtisch-Basis (28) an diametral entgegengesetzten Positionen ausgeführt ist.

8. Träger (1) nach Anspruch 1, wobei der zweite Abschnitt (8B, 10B) wenigstens zwei Aufnahmeelemente (12) für eine Kraftfahrzeugtür (D) trägt.

9. Träger (1) nach Anspruch 5, wobei die Gewindespindel (18) an gegenüberliegenden Enden des Säulenelementes (2) drehbar gelagert ist.

## Revendications

1. Support (1) pour portières de véhicules automobiles (D), en particulier adapté pour être installé sur une station d'assemblage mobile (SK) pour des véhicules automobiles, comprenant :
- un élément de colonne (2) ayant un axe longitudinal (Z2) ; et
- une unité de support (4) configurée pour recevoir au moins une portière de véhicule automobile (D) et comportant un coulisseau (6) couplé audit élément de colonne (2) et mobile axialement le long dudit axe longitudinal (Z2),
ladite unité de support (4) comprenant au moins un premier élément articulé (8, 10) relié audit coulisseau (6), où une première partie (8A, 10A) dudit élément articulé (8, 10) est fixée au coulisseau (6) et une deuxième partie (8B, 10B) dudit élément articulé (8, 10) est reliée en pivotement à ladite première partie (8A, 10A) et porte au moins un élément de réception (12) pour une portière de véhicule automobile (D), et
dans lequel la deuxième partie (8B, 10B) de chaque élément articulé (8, 10) est mobile par rapport à la première partie (8A, 10A) entre une position repliée et une position déployée, où dans la position déployée une distance entre la deuxième partie (8B, 10B) et la première partie (8A, 10A) est supérieure à la distance entre la deuxième partie (8B, 10B) et la première partie (8A, 10A) dans la position repliée,
le support (1) étant **caractérisé en ce qu'**il comporte en outre un deuxième élément articulé (10) relié audit coulisseau (6), ledit deuxième élément articulé (10) comportant une première partie respective (10A) fixée au coulisseau (6) et une deuxième partie respective (10B) reliée en pivotement à ladite première partie (10A) et portant au moins un élément de réception (12) pour une portière de véhicule automobile (D), où la deuxième partie (10B) dudit deuxième élément articulé (10) est mobile par rapport à la première partie (10A) entre une position repliée et une position déployée, dans lequel, dans la position déployée, une distance entre la deuxième partie (10B) et la première partie (10A) est supérieure à la distance entre la deuxième partie (10B) et la première partie (10A) dans la position repliée.

2. Support (1) selon la revendication 1, dans lequel la deuxième partie (8B, 10B) est reliée en pivotement à la première partie (8A, 10A) autour d'un axe (Z8, Z10) parallèle audit axe longitudinal (Z2), dans lequel, dans la position déployée, la distance angulaire entre la deuxième partie (8B, 10B) et la première partie (8A, 10A) est supérieure à la distance angulaire entre la deuxième partie (8B, 10B) et la première partie (8A, 10A) dans la position repliée.

3. Support (1) selon la revendication 1, dans lequel ledit élément de colonne (2) peut tourner (28) autour dudit axe longitudinal (Z2).

4. Support (1) selon la revendication 1, dans lequel ledit coulisseau (6) est mobile le long d'un guide longitudinal (12) prévu sur ledit élément de colonne (2), de préférence un double guide, et s'engage avec un élément d'entraînement (18) reçu dans ledit élément de colonne (2).

5. Support (1) selon la revendication 4, dans lequel ledit élément d'entraînement (18) est une vis pouvant tourner autour dudit axe longitudinal (Z2) et pouvant être actionné en rotation au moyen d'un bloc moteur (20) installé sur ledit élément de colonne (2), de préférence au-dessus de celui-ci, ledit coulisseau (6) comportant un écrou (24) qui s'engage avec ladite vis (18).

6. Support (1) selon la revendication 2, dans lequel la deuxième partie (8B, 10B) est configurée pour couvrir une plage angulaire de 90° entre ladite position repliée et ladite position déployée.

7. Support (1) selon la revendication 3, dans lequel ledit élément de colonne (2) comporte une base de plaque tournante (28), ladite base de plaque tournante (28) comportant un élément de commande de pédale (30) configuré pour bloquer ladite base de plaque tournante (28) dans des positions diamétralement opposées.

8. Support (1) selon la revendication 1, dans lequel la deuxième partie (8B, 10B) porte au moins deux éléments de réception (12) pour une portière de véhicule automobile (D).

9. Support (1) selon la revendication 5, dans lequel ladite vis (18) est supportée en rotation au niveau des extrémités opposées dudit élément de colonne (2).
